(19) Europäisches Patentamt
European Patent Office
Office européen des brevets

(11) **EP 3 629 292 B1**

(12) **EUROPEAN PATENT SPECIFICATION**

(45) Date of publication and mention
of the grant of the patent:
**17.06.2026 Bulletin 2026/25**

(51) International Patent Classification (IPC):
**G06T 7/80** (2017.01)

(21) Application number: **18197220.9**

(52) Cooperative Patent Classification (CPC):
**G06T 7/85;** G06T 2207/30252

(22) Date of filing: **27.09.2018**

(54) **REFERENCE POINT SELECTION FOR EXTRINSIC PARAMETER CALIBRATION**

AUSWAHL DES REFERENZPUNKTS FÜR DIE KALIBRIERUNG VON EXTRINSISCHEN PARAMETERN

SÉLECTION DE POINT DE RÉFÉRENCE D'ÉTALONNAGE DE PARAMÈTRE EXTRINSÈQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2020 Bulletin 2020/14**

(73) Proprietor: **AUMOVIO Autonomous Mobility Germany GmbH**
**85057 Ingolstadt (DE)**

(72) Inventors:
• **Silva, Carlos**
**Eastbourne, BN21 3EJ (GB)**
• **Gao, Lingjun**
**Uckfield, TN22 5BY (GB)**

(74) Representative: **Aumovio Corporation**
**AUMOVIO Germany GmbH**
**Taunusstraße 36**
**80807 München (DE)**

(56) References cited:
EP-A1- 3 086 284     US-A1- 2017 347 030

• **Q-T LUONG ET AL: "Self-Calibration of a Moving Camera from Point Correspondences and Fundamental Matrices", INTERNATIONAL JOURNAL OF COMPUTER VISION, KLUWER ACADEMIC PUBLISHERS, BO, vol. 22, no. 3, 1 March 1997 (1997-03-01), pages 261 - 289, XP019216351, ISSN: 1573-1405, DOI: 10.1023/A:1007982716991**

• **LIEBOWITZ DAVID ET AL: "Camera calibration and reconstruction of geometry from images", 1 January 2001 (2001-01-01), XP093186674, Retrieved from the Internet <URL:https://www.robots.ox.ac.uk/~vgg/publications/2001/Liebowitz01/liebowitz01.pdf>**

• **HE QIANG ET AL: "Vanishing Point Detection by Clustering on the Normalized Unit Sphere", INTERNATIONAL JOURNAL OF COMPUTER APPLICATIONS, 1 March 2013 (2013-03-01), pages 22 - 28, XP093187210, Retrieved from the Internet <URL:https://research.ijcaonline.org/volume65/number10/pxc3885927.pdf> DOI: 10.5120/10961-5927**

• **R CIPOLLA ET AL: "Camera calibration from vanishing points in images of architectural scenes", PROCEEDINGS OF THE BRITISH MACHINE VISION CONFERENCE (BMVC) 1999, 13-19 SEP. 1999, UNIVERSITY OF NOTTINGHAM, UK, 13 September 1999 (1999-09-13), pages 382 - 391, XP055084060, Retrieved from the Internet <URL:http://citeseerx.ist.psu.edu/viewdoc/download;jsessionid=22425C149EF630253FDAE29EE9E0D53A?doi=10.1.1.16.946&rep=rep1&type=pdf> [retrieved on 20131015]**

**Description**

TECHNICAL FIELD

The present disclosure relates to methods and apparatus for selecting a reference point to be used in the calibration of one or more extrinsic parameters associated with an image sensor.

BACKGROUND

Modern vehicles are frequently equipped with various electronic systems intended to assist a driver in the driving of a vehicle. These electronic systems often involve the use of one or more vehicle mounted image sensors such as mono and wide-angle cameras which are used to capture images of the vehicle and its external environment. The images captured are analysed and may be used either alone or in combination with input from other environment sensors to provide one or more driver assistance functions such as object detection, lane departure warning, parking assist and distance measurement.

Vehicle mounted image sensors may also be used to provide a driver with a more comprehensive view of the external environment including access to viewpoints which were previously unobtainable. This is accomplished by displaying to the driver a composite image generated by stitching together images from the multiple image sensors mounted at different parts of a vehicle. An example is the surround view system which typically deploys four or six wide angle image sensors each having a greater than 180 degrees horizontal field of view and mounted externally at the front, rear and sides of the vehicle. Images from the various surround view image sensors are typically converted to a common top view perspective and stitched together so that a driver viewing the composite image has a 360 degree view around the vehicle.

However, the process of generating a composite image involves converting images from the different image sensors to a common perspective view and aligning the images prior to stitching. This requires knowledge of the projection matrix used to map 3D points in the real world to the 2D image plane of an image sensor. Similarly, the performance of other driver assistance functions such as distance measurement also requires knowledge of the projection matrix. The actual projection matrix associated with a vision-based sensor may vary depending on the type of image sensors used but projection matrices are generally defined in terms of the intrinsic and extrinsic parameters associated with an image sensor. Intrinsic parameters are generally concerned with the optics of an image sensor, that is, how light is projected through the image sensor and onto the image plane of the sensor. They include parameters such as focal length and focal point. Extrinsic parameters, on the other hand, relate to the position and orientation of an image sensor which may be measured with reference to a world coordinate system (i.e. absolute extrinsic parameters) or relative to other image sensors (i.e. relative extrinsic parameters). Position related extrinsic parameters describe the location of an image sensor along an x, y and z axis while orientation related extrinsic parameters describe its rotation along the x, y and z axis.

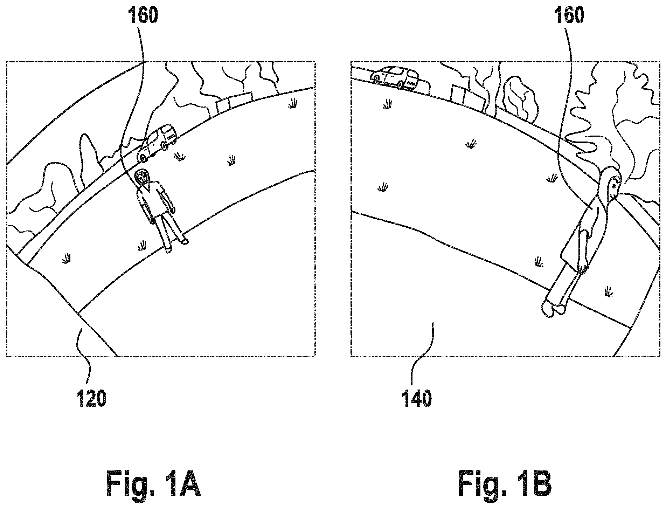

Therefore, in order to facilitate the proper operation of image sensor based driver assistance functions, it is essential to calculate or calibrate the extrinsic parameters of an image sensor when it is first installed on a platform, for example, a vehicle. Subsequent extrinsic parameter calibration or recalibration is also important, particularly for vehicle mounted image sensors, because the values of these parameters may change with time due to various factors such as the effects of wear and tear, platform vibrations (e.g. in the case of a vehicle, vibrations caused by bumpy roads and door slams) and replacement of various vehicle parts. In view of the foregoing, various methods extrinsic parameter calibration methods have been developed including some which are based on tracking corresponding images of a 3-space reference point appearing in an overlapping field of view of two or more image sensors. However, it can be difficult to locate corresponding images of the same 3-space reference point of image sensors which capture different perspectives of the same object due to differences in sensor mounting locations. An exemplary illustration of this problem is shown in FIGS. 1A and 1B where a person standing at the side of a vehicle appears in an image (120) captured by a side camera mounted on the side view mirror of a vehicle as well as in an image (140) captured by a camera mounted on the rear of the same vehicle. Since the side and rear mounted cameras are facing different directions, the side camera captures a frontal view of the person 160 in the scene (Fig. 1A) while the rear camera captures a side perspective 140 (Fig. 1B) of the same person. As a result of differences in perspective, the process of locating corresponding images of the same 3-space point on the person 160 can be complicated and/or time consuming which in turn affects the accuracy of and/or duration needed for extrinsic parameter calibration. This problem may be further compounded when wide angle lens cameras (for instance in a surround view camera system) which suffer from non-linear distortion of images are used because the amount of image distortion varies according to the position of such cameras with respect to an object.

US Patent Application US 2017/0347030 A1 discloses a method and device for stabilization of a surround view image.

EP 3 086 284 A1 discloses a method of calibrating at least two cameras of a vehicle.

A camera calibration technique that exploits constraints of parallelism and orthogonality is presented in "Camera calibration from vanishing points in images of architectural scenes" by R. Cipolla et al.

"Self-Calibration of a Moving Camera from Point Correspondences and Fundamental Matrices" by Q.-T. Luong and O.D. Faugeras addresses the problem of estimating three-dimensional motion and structure from motion with an uncalibrated moving camera.

In "Camera Calibration and Reconstruction of Geometry from Images" by David Liebowitz a 3D measurement system based on two square pixel views of the vanishing points of three orthogonal directions is described.

Besides, a vanishing point detection algorithm is presented in "Vanishing Point Detection by Clustering on the Normalized Unit Sphere" by Q. He and C. -H. Henry Chu.

In view of the foregoing, there is a need for less complex and/or time consuming methods of selecting reference points for use in extrinsic parameter calibration.

SUMMARY

Aspects of this disclosure provide methods and device for selecting a reference point for extrinsic parameter calibration of at least a first or second image sensor.

One aspect of this disclosure provides a method for selecting a reference point for extrinsic parameter calibration of at least a first or second image sensor of a vehicle comprising selecting by a processor a preliminary reference point which is located at the intersection point or vanishing point of two straight line feature edges appearing in a first and second image frame captured by the first and second image sensor respectively. The straight line feature edges may comprise the edges of structures such as pillars, the surface of walls, edges of patterns present on a surface such as road or carpark markings. Other types of straight line feature edges may also be suitable. In accordance with this disclosure, the preliminary reference point and straight line feature edges used in the selection thereof can be any suitable features present in an environment of the image sensor. There is no need for dedicated calibration reference points nor feature edges with known structures. Accordingly, the method may be used for selecting reference points to be used in both offline and online calibration methods. Offline calibration methods use dedicated calibration structures with known geometry and is typically carried out in a workshop setting. Online calibration, on the other hand, do not use dedicated calibration structures but is based instead on scene structures which meet specific geometric requirements and/or tracking one or more calibration points across a plurality of image frames. The processor determines a first epipolar line corresponding to a first reference image point of the preliminary reference point in the first image, the first epipolar line being located on an image plane of the second image sensor. The processor then determines if the first epipolar line intersects a second reference image point of the preliminary reference point in the second image frame. The use of epipolar geometry in the above described manner advantageously facilitates the selection of reliable calibration reference points because points which appear to lie at the intersection of feature edges in images but are not actual intersection points in the real world can be identified. Furthermore, the foregoing method also does not involve complex calculations thus potentially reducing time and computing resources needed for reference point selection. A reduction in the duration for reference point selection would bring about a corresponding reduction in the overall extrinsic parameter calibration time.

In some implementations, the preliminary reference point may be selected as a reference point for extrinsic parameter calibration in response to the first epipolar line intersecting the second reference image point. In other implementations, the processor determines a second epipolar line corresponding to the second reference image point, the second epipolar line being located on an image plane of the first image sensor. The processor also determines if the second epipolar line intersects with the first reference image point. In this variation, the preliminary reference point may then be selected as a reference point for extrinsic parameter calibration in response to both the first epipolar line intersecting the second reference image point and the second epipolar line intersecting the first reference image point.

In some implementations, processor may detect for the presence of straight line feature edges in at least a portion of the first and second image frames before selecting the preliminary reference point. The detection of straight line feature edges may involve detecting for the presence of edges in at least a portion of the first and second image frames and then determining which of the detected edges are straight lines. Edge detection algorithms such as canny edge detection algorithm, Smallest Univalue Segment Assimilating Nucleus (SUSAN) edge detection algorithm, Sobel filter and other algorithms based on canny edge detection may be used for detecting the presence of edges while Hough Transform may be used to detect which of the detected edges are straight lines. In an alternative implementation, straight line feature edges may be detected directly from the first and second image frames omitting the edge detection step. In an optional implementation where catadioptric image sensors such as those equipped with fisheye lenses are used, feature edges which are straight lines may be identified by checking if image points back-projected from the first and second image frames onto a unitary sphere form part of a circle with its centre corresponding to the centre of the unitary sphere.

1. In another implementation, a method for selecting a reference point for extrinsic parameter calibration of at least a first or second image sensor comprises selecting by a processor two parallel straight line feature edges appearing in both a third and fourth image frame captured by the first and second image sensor. The processor determines at least a first vanishing point for the two parallel straight line feature edges based on the third image frame and at least a second vanishing point for the two parallel straight line feature edges based on the fourth image frame. The first vanishing point may be determined by back-projecting image points for the two parallel straight line feature edges in the third image frame onto a unitary sphere and calculating the first vanishing point from the image points back-projected from the third image frame. A second vanishing point may be determined by back-projecting image points from the same two parallel straight line feature edges in the fourth image frame onto the unitary sphere and calculating the second vanishing point from the image points back-projected from the fourth frame. The first and second vanishing points are located where circles formed from the back-projected parallel lines intersect on the unitary sphere. The processor selects the first or second vanishing point as a reference point in response to the first and second vanishing point substantially coinciding. The aforementioned method of selecting a reference point by checking for coinciding vanishing points may be applied in conjunction with the first aspect to select a second reference point or as an independent method for reference point selection. In some implementations, the third and fourth image frame may be also be the same as the first and second image frame. That is, the first and second image frames are used for selecting reference points using methods based on both aspects. In some variations, Random Sample Consensus (RANSAC) algorithm may be further applied to determine if the preliminary reference point may be used as a reference point for extrinsic parameter calibration.

A second aspect of this disclosure provides a device for selecting a reference point for extrinsic parameter calibration of at least a first or second image sensor of a vehicle comprising a processor and at least one memory coupled to the processor and storing instructions executable by the processor causing the processor to select a preliminary reference point which is located at the intersection point or vanishing point of two straight line feature edges appearing in a first and second image frame captured by the first and second image sensor respectively, determine a first epipolar line corresponding to a first reference image point of the preliminary reference point in the first image, the first epipolar line being located on an image plane of the second image sensor and determine if the first epipolar line intersects a second reference image point of the preliminary reference point in the second image frame. In some implementations, the at least one memory may further cause the processor to determine a second epipolar line corresponding to the second reference image point, the second epipolar line being located on an image plane of the first image sensor and determine if the second epipolar line intersects with the first reference image point. The processor may be caused to select the preliminary reference point as the reference point for extrinsic parameter calibration in response to the first epipolar line intersecting the second reference image point or both the first epipolar line intersecting the second reference image point and the second epipolar line intersecting the first reference image point.

In some implementations, a device for selecting a reference point for extrinsic parameter calibration of at least a first or second image sensor comprising a processor and at least one memory coupled to the processor and storing instructions executable by the processor is provided. The at least one memory causing the processor to: select two parallel straight line feature edges appearing in both a third and fourth image frame captured by the first and second image sensor, determine at least a first vanishing point for the two parallel straight line feature edges based on the third image frame, determine at least a second vanishing point for the two parallel straight line feature edges based on the fourth image frame and in response to the first and second vanishing point substantially coinciding, selecting the first or second vanishing point as the reference point. In some implementations, the same device may be operable to select reference points based on both the third and fourth aspect of this disclosure. For instance, the device may select a first reference point based on the third aspect which relies on coincidence of epipolar lines and reference and a second reference point based on the fourth aspect of matching vanishing points.

The details of one or more implementations of the disclosure are set forth in the accompanying drawings and the description below. Other aspects, features, and advantages will be apparent from the description and drawings, and from the claims.

BRIEF DESCRIPTION OF THE FIGURES

FIGS. 1A and 1B are exemplary illustrations of the same scene as captured from the perspective of cameras mounted respectively on the side mirrors and rear of the same vehicle;

FIG. 2 is an exemplary schematic diagram illustrating the relationship between a 3-space point X and its corresponding image points x and x' when projected in an image plane of a respective first and second image sensor;

FIG. 3 is a functional block diagram of a system 300 comprising a machine vision module for selecting a reference point for extrinsic parameter calibration in accordance with one implementation of this disclosure;

FIG. 4 is a flow diagram illustrating an automated method for selecting an extrinsic parameter calibration reference point in accordance with one implementation of this disclosure;

FIG. 5A shows the results after canny edge detection has been applied to an exemplary image taken by a fisheye image sensor;

FIG. 5B shows image points from a catadioptric sensor after back-projection onto a unitary sphere;

FIGS. 6A is an image of a first exemplary calibration scene where a first and second epipolar lines pass through the image of a sample reference point located at the intersection of two feature edges;

FIG. 6B is an image of a second exemplary calibration scene where the first epipolar line does not pass through the image of a sample reference point located at the intersection of two feature edges;

FIG. 7 is an image illustrating an exemplary calibration scene in accordance with one implementation of this disclosure where a reference point for extrinsic parameter calibration is located at the vanishing point for two parallel feature edges; and

FIG. 8 is a simplified schematic diagram illustrating an example of a unitary sphere comprising two circles obtained by back-projecting the images of two parallel feature edges according to one implementation of this disclosure.

## DETAILED DESCRIPTION

In the following detailed description, reference is made to the accompanying figures. In the figures, similar symbols typically identify similar components, unless context dictates otherwise.

According to a one aspect of this disclosure, a reference point for extrinsic parameter calibration of a first or second image sensor is selected by first selecting a preliminary reference point which is located at the intersection point or vanishing point of two straight line feature edges in an overlapping area of first and second image frames captured by the first and second image sensor. The principles of epipolar geometry are then utilised to confirm if the preliminary reference point is an actual 3-space point in the real world which is usable for calibration. Epipolar geometry describes the projective relationship between a 3-space point X and corresponding images (x and x') of it when projected on an image plane of a first and second image sensor respectively. The image sensor may be a vision sensor. This projective relationship is independent of scene structure and only depends on the image sensor's intrinsic and extrinsic parameters.

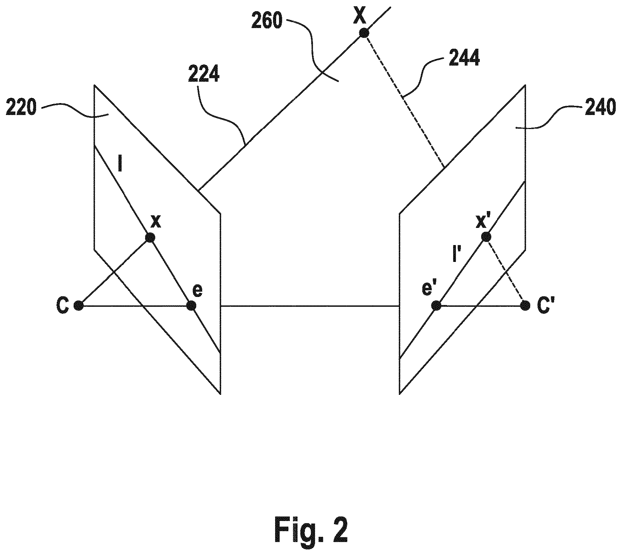

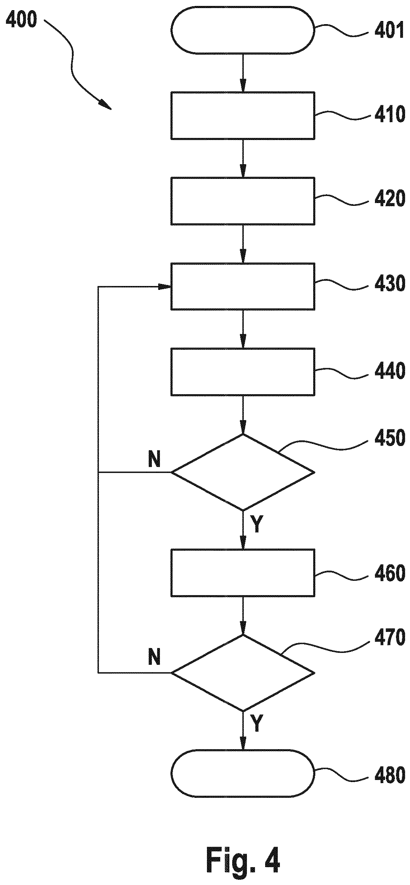

FIG. 2 is an exemplary schematic diagram illustrating a 3-space point X in the real world located within the field of view of first and second image sensors with optical centres C and C' respectively. The point X is projected as first and second image points (x,x') on the image planes (220, 240) of the first and second image sensors respectively. According to epipolar geometry, the real world point X, image points (x, x') and first and second image sensor centres (C, C') all lie on a common epipolar plane denoted by the reference numeral 260. The rays (224, 244) back-projected from the image points x and x' pass through their respective image sensor centres (C, C') and intersect at X. x and x' are related to each other such that the ray (224) back-projected from x is imaged as a first epipolar line l' in the second image plane 240 of the second camera and the corresponding second image point x' must lie along this first epipolar line l'. Conversely, the ray 244 back-projected from x' is imaged as a second epipolar line 1 in the first image plane and the first image point x has to be located along the second epipolar line l. The above described projective relationship between the first and second image points (x, x') is represented by the equation $x'^{T}Fx = 0$, where F is a 3 x 3 fundamental matrix which depends on amongst others the intrinsic and extrinsic parameters of the first and second cameras. As illustrated in the succeeding description for the flowchart in FIG. 4, this restriction on the image points of a 3-space point imposed by epipolar geometry is used in the first aspect of this disclosure for the selection of a reference point for extrinsic parameter calibration.

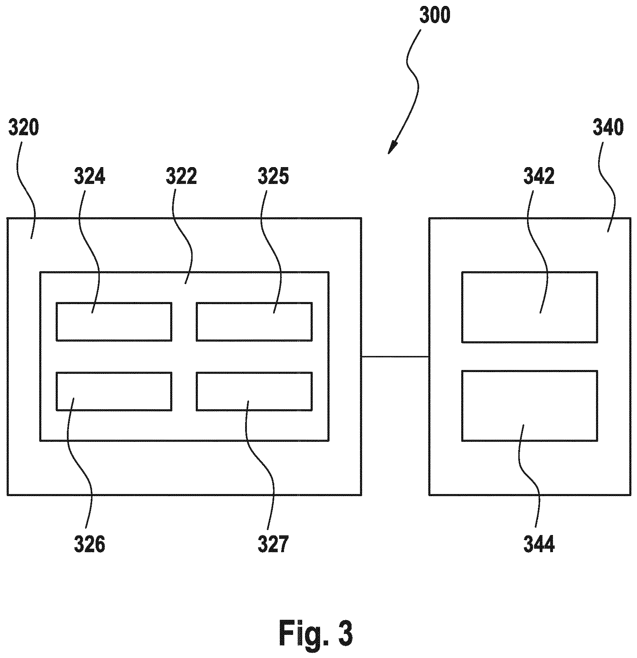

FIG. 3 is a functional block diagram of an exemplary system 300 associated with a vehicle comprising an environment module 320 in communication with a machine vision module 340. The machine vision module 340 is configured to perform an automated method for selecting reference points to be used in the extrinsic parameter calibration of one or more image sensors in accordance with some implementations of this disclosure. The selection method is based on the concept of epipolar geometry illustrated previously in relation to FIG. 2. The environment module 320 comprises environment sensors operative to sense and collect information about an external environment of the vehicle. In the FIG. 3 implementation, the environment module comprises an image sensor module 322 including 4 image sensors (324-327) mounted externally at different parts of the vehicle. Each image sensor having its own set of extrinsic parameters. It will be appreciated by a person skilled in the art that other types and numbers of image sensors may also be used in the image sensor module 322. The environment module 320 may also include other types of environment sensors such as radar, lidar and ultrasonic sensors.

The machine vision module 340 in the FIG. 3 implementation comprises a computing processor 342 and a hardware memory 344 in communication with the processor 343. The computing processor 342 may for example be a microcontroller or graphics processing units (GPU) capable of accessing the memory 344 to store information and execute instructions stored therein. Alternatively, the processor 342 and memory 344 may also be integrated on a single integrated circuit. The memory 344 stores information accessible by the processor 342 such instructions executable by the processor 342 and data which may be stored, retrieved or otherwise used by the processor 342. For example, the processor 342 may execute methods for selecting a reference point to be used in the extrinsic parameter calibration of an image sensor (324-327) according to this disclosure based on instructions stored in the memory 344. The processor 342 may also execute methods for the detection of edges and lines in an image frame based on instructions stored in the memory 344. Although FIG. 3 functionally illustrates the processor 342 and memory 344 as being located within the same block, it will be appreciated by an ordinary person skilled in the art that the processor and memory may also comprise multiple processors and/or memories located in different housing. Accordingly, references to a processor or memory will be understood to include references to a collection of processors and/or memories capable of performing the functions of the machine vision module described in this disclosure. Further, it will be appreciated by a person skilled in the art that the machine vision module may exist independently of other modules or components. Alternatively, it may also be a shared element or process of other modules, programs or hardware. For instance, the processor 342 and memory 344 may be configured to perform the extrinsic parameter calibration of the image sensors and object detection functions. Finally, although the system in FIG. 3 is deployed on a vehicle, it may also be applied to image sensors mounted on other platforms whether stationary, mobile, autonomous or non-autonomous.

FIG. 4 illustrates an exemplary automated method for selecting a reference point to be used in the extrinsic parameter calibration of one or more image sensors based on epipolar geometry. According to one implementation, the method 400 may be performed by a machine vision module 340 such as the one illustrated in FIG. 3. However, it will be appreciated that this is not intended to be limiting on the disclosure and other hardware or software configurations may also be suitable. Method 400 starts at block 401. The machine vision module may be programmed to initiate the method 400 upon receipt of a request for extrinsic parameter calibration of one or more image sensors (324-327). Such request may be made, for example, by the image sensors or a processor within the environment module 322. The request may be made either recurrently or based on the occurrence of specified events. For example, when the image sensors at a workshop for calibration, detection of degradation in the operation of one or more image based functions. In other implementations (not shown), the machine vision module may also be programmed conduct extrinsic parameter calibration on a recurrent basis and the selection of reference points is incorporated as part of the calibration process.

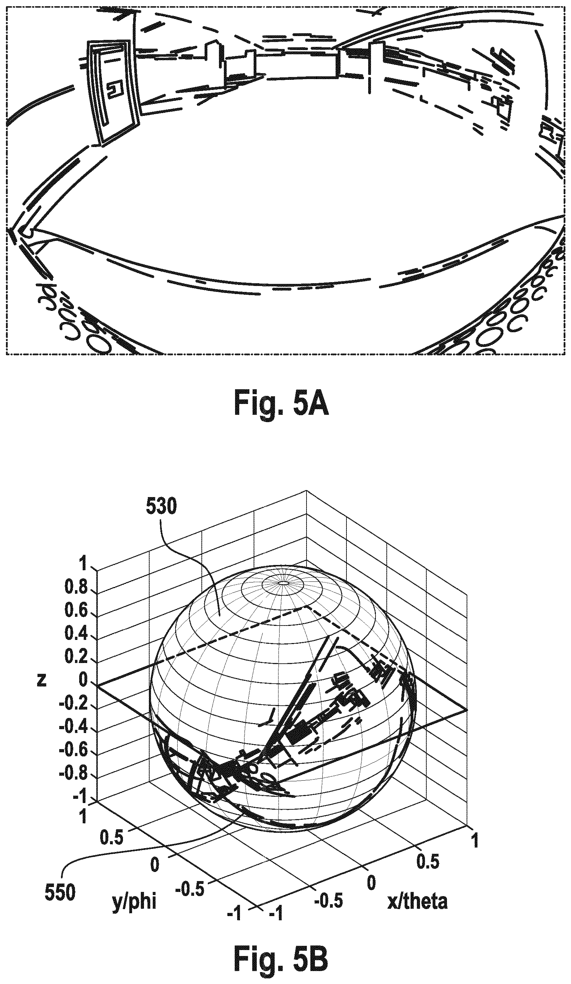

The process then moves on to block 410 where the machine vision module 340 performs an edge detection algorithm to detect edges in a first and second image frame received from a first (324) and second image sensor (325) respectively. The first and second image sensors having a field of view that is at least partially overlapping. Examples of known edge detection algorithms which may be used include canny edge detection algorithm, Smallest Univalue Segment Assimilating Nucleus (SUSAN) edge detection algorithm, Sobel filter and other algorithms which are based on canny edge detection. In general, the canny edge detection algorithm detects edges by identifying points which may potentially form part of an edge based on factors such as gradient magnitude, direction, and connectivity to other pixels. Pixels which are unlikely to constitute part of an edge and are part of edges that are weak are removed. In some implementations, the first and second image frames may be subjected to one or more image enhancement processing steps prior to the edge detection step. Examples of image enhancement processes include colour marking, noise reduction, and colour correction. FIG. 5A shows the results after canny edge detection has been applied to an exemplary colour image captured by a fisheye image sensor. The lines in FIG. 5A correspond to edges detected by the canny edge detection algorithm. The use of wide-angle fisheye lenses causes non-linear distortion such that straight lines in the real world appear as curves in a fisheye image frame. Referring back to FIG. 5A, since the original coloured image has not been compensated for non-linear distortion caused by fisheye lenses, some of the curved edges extracted in FIG. 5A may actually correspond to straight line edges in real life. In other implementations, canny edge detection may be applied to detect edges only in a specific part of an image frame as opposed to the whole image frame like in the FIG. 5A example. For instance, the edge detection algorithm may be executed only for image points which appear in both the first and second image frames. Subjecting the whole image frame to edge detection has certain potential drawbacks such as longer processing time/larger computing demands. Processing the whole image may also be less efficient as edges which are useful and useless in the selection of calibration reference points are also extracted.

In block 420, the machine vision module extracts from the edges detected in block 410, a plurality of straight line feature edges which may be used in the selection of a reference point for extrinsic parameter calibration. According to this disclosure, the feature edge selection criterion requires the extracted feature edges to be straight lines. In an optional variation, the feature edge selection criterion may also require each extracted straight feature edge to be parallel to one of the x, y or z axes associated with the world co-ordinate system. Since the x, y and z axes of the world co-ordinate system are straight lines, lines which are parallel thereto are also more likely to behave as straight lines when projected in different cameras. Other suitable requirements may also be included as part of the feature edge selection criterion. For instance, requiring at least a portion of each extracted straight line feature to lie within an overlapping field of view of the first and second image sensors. The feature edges may be extracted in block 420 by subjecting the detected edges in block 410 to an algorithm which detects predefined shapes in an image frame. An example is the Hough Transform which detects pre-defined shapes by checking how closely image points comply with the mathematical form of a pre-defined shape which in this case is a straight line. In other implementations, the edge detection block 410 may be omitted and the straight line feature edges extracted directly from image points in the first and second image frames. In such instances, Hough transform or other algorithms for straight line detection may be applied to all image points present in the first and second image frames instead of just those flagged in block 410 as forming part of an edge. The edge detection step in block 410 whilst not essential is advantageous in that it helps to make the recognition of straight line feature edges easier and/or faster by narrowing down which information in the first and second image frames are useful for the extraction of straight line feature edges.

It is known that for catadioptric image sensors such as those equipped with fisheye lenses, the mapping of 3D points in the real world to a 2D image can be modelled using the sphere camera model. According to the sphere camera model, this mapping comprises a first projection of the 3D point to a point on a unitary sphere and a second perspective projection from the unitary sphere to the image plane of the sensor. In particular, for catadioptric sensors, image points associated with a straight line in the real world when back-projected onto the surface of the unitary sphere will form part of a circle whose centre coincides with the centre of the unitary sphere. Therefore, in some implementations where reference points are selected using image frames from catadioptric image sensors, straight line feature edges in the real world may be identified by back-projecting image points corresponding to a feature edge onto a unitary sphere and using Hough transform to check how closely the image edge points define part of a circle centred at the centre of the unitary sphere. For example, an edge detected in block 410 may be classified as constituting a straight line feature edge in the real world if 90% of the back-projected points for that edge fall within a circle with its centre co-incident with that of the unitary sphere. Other threshold percentages may also be suitable. FIG. 5B shows an example where catadioptric sensor image points are back projected onto a unitary sphere 530. Since the image points back-projected as curve 550 on the unitary sphere 530 fall within a circle centred at the centre of the unitary sphere 530, according to the sphere camera model, these image points correspond to a straight line feature edge in real life.

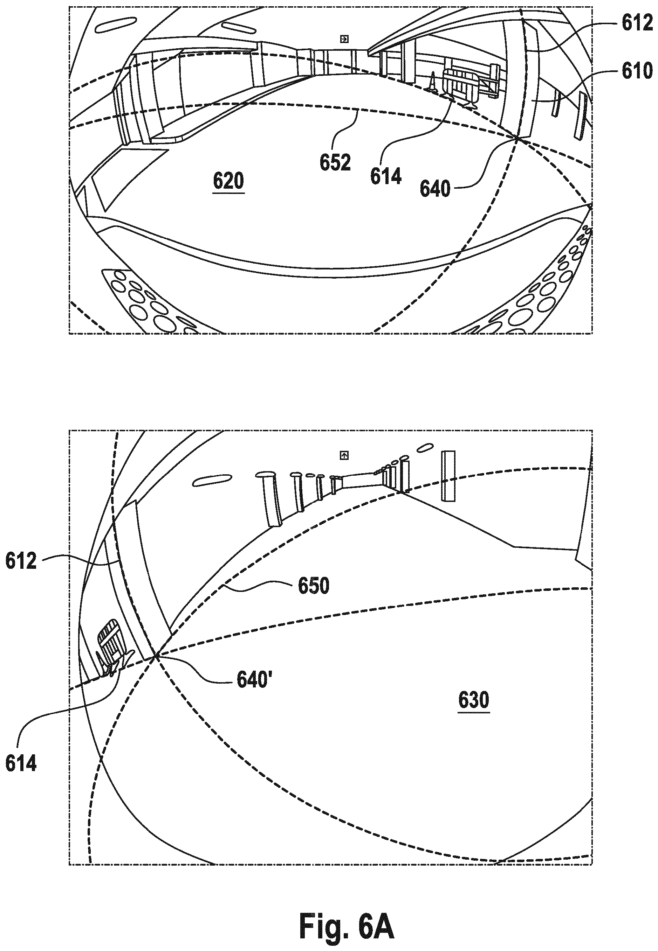

The process then goes on to block 430 where a preliminary reference point X, for extrinsic parameter calibration of at least the first or second image sensor is selected. The preliminary reference point, X, may be located at either the intersection point or vanishing point associated with two straight line feature edges appearing in both the first and second image frames captured by the first and second image sensors respectively. The straight line feature edges having been extracted previously in block 420. FIG. 6A shows an exemplary calibration scene where the preliminary reference point, X, is located at the intersection of two straight line feature edges. In this example, the straight line feature edges comprise a vertical edge 612 and a bottom horizontal edge 614 of a pillar 610. Both feature edges appearing in the first and second image frames (620, 630) captured by a first and second image sensor respectively. The location of the preliminary reference point X (as denoted by the reference numeral 640 in the first image frame and 640' in the second image frame) is at the intersection of the vertical and horizontal edges (612, 614) of the pillar 610. In one implementation, the real life co-ordinates of a preliminary reference point X lying at the intersection point of the vertical and horizontal edges (612, 614) may be derived from a cross product of the lines ($l_1$, $l_2$) representing the two straight line feature edges as per equation (1). The lines may be derived by extrapolating the detected straight line features edge (612, 614) like in the manner as shown in FIG. 6A and representing the edges mathematically as a line.

$$X = l_1 \times l_2 \hspace{4cm} (1)$$

In another implementation, the intersection point X may also be calculated from the product of $[l_1]_x$ which is a three-by-three skew-symmetric representation of the line $l_1$ and $l_2$. This is illustrated below in equation (2).

$$X = [l_1]_x \, l_2 \hspace{4cm} (2)$$

It is to be appreciated that equations (1) and (2) may also be used to derive the intersection point between straight lines which are not perpendicular to each other like in the FIG. 6A example.

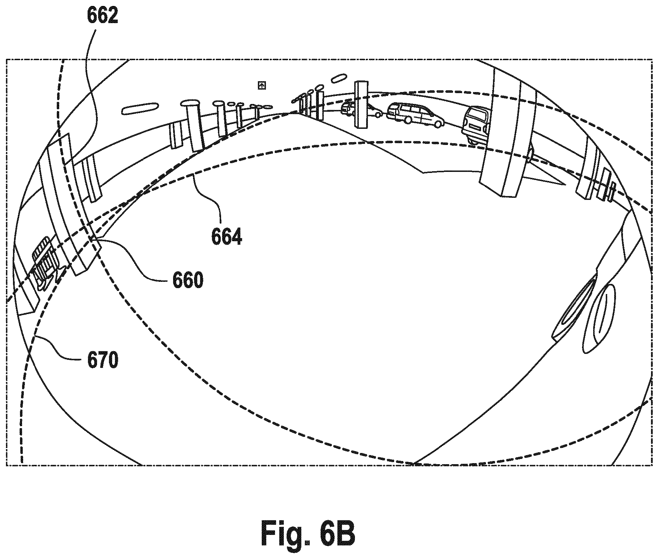

For the sake of discussion, let us assume that the preliminary reference point X chosen in block 430 is imaged as a first reference image point x in the first image plane of the first image sensor and second reference image point x' in the second image plane of the second image sensor. As mentioned in the earlier discussion on epipolar geometry, a ray (224) back-projected from the first image point, x is imaged as a first epipolar line l' in the second image plane 240 (see FIG. 2 illustration). According to epipolar geometry, the second image point x' has to be located along this first epipolar line l'. Utilizing this concept for the selection of a reference calibration point, in block 440, a first epipolar line l' corresponding to a first reference image point x of the preliminary reference point is determined. The process then checks in decision block 450 if the second reference image point x' of the preliminary reference point X is indeed located along the first epipolar line l' . In one implementation, this may be determined by plotting the first epipolar line l' in the second image frame and visually checking if the second reference image point for the preliminary reference point (i.e. the second image point x') lies on the first epipolar line l'. If the answer is yes, then the process goes on to block 460. The second image frame 630 of FIG. 6A illustrates an example where the first epipolar line l' (denoted by the reference numeral 650) associated with the image of the preliminary reference point X (640) in the first image frame 620 passes through the image point x' of the preliminary reference point in the second image frame 630 as denoted by the reference numeral 640' (i.e. the second reference image point) . In some implementations, this may be sufficient to confirm that the preliminary reference point may be selected as a reference point for extrinsic calibration and the selection method 400 may be terminated instead of going to block 460. On the other hand, if the reference point in the second image frame (i.e. the second reference image point x') does not lie on the first epipolar line l', the process goes to block 430 where another preliminary reference point is selected checked for compliance with epipolar geometry. FIG. 6B shows another example where a preliminary reference point X lying at the intersection of a vertical and horizontal straight line walls (662, 664) of a pillar is selected. The second reference image point x' corresponding to the preliminary reference point X captured by a second image sensor is denoted by the reference numeral 660. A first epipolar line l' (670) corresponding to a first reference image point of the reference point captured by a first image sensor (not shown) is plotted in a second image frame shown in FIG. 6B. Unlike the example in FIG. 6A, the first epipolar line 670 in the FIG. 6B example does not pass through the second image 660 of the preliminary reference point in the second image frame. What this means is that the preliminary reference point X is actually not an intersection point in real life. Accordingly, preliminary reference point X (660) is not suitable for use as an extrinsic parameter calibration reference point and another preliminary reference point should be selected and tested according to blocks 440-470 in FIG. 4.

At block 460, a second epipolar line 1 corresponding to the second reference image point x' of the preliminary reference point X captured by the second image sensor and appearing in the first image plane is determined. The process then determines at decision block 470, if the first reference image point x of the preliminary reference point X captured by the first image sensor (i.e. first image point) lies on the second epipolar line l. The same method of checking as that illustrated in the FIG. 6A example for block 450 may be used. Referring to FIG. 6A and the first image frame 620, it can be seen that the first image point 640 of the preliminary reference point lies on the second epipolar line 1 (denoted by the reference numeral 652). Upon receipt of such confirmation, the preliminary reference point being tested is selected as a calibration reference point and the method ends at 480. On the other hand, if the first image point x does not lie on the second epipolar line 1 then the process goes back to block 430 where another preliminary reference point is selected and blocks 440-470 are repeated to test if it is a suitable reference point. The new preliminary reference point may be located at the intersection or vanishing point of two straight line feature edges.

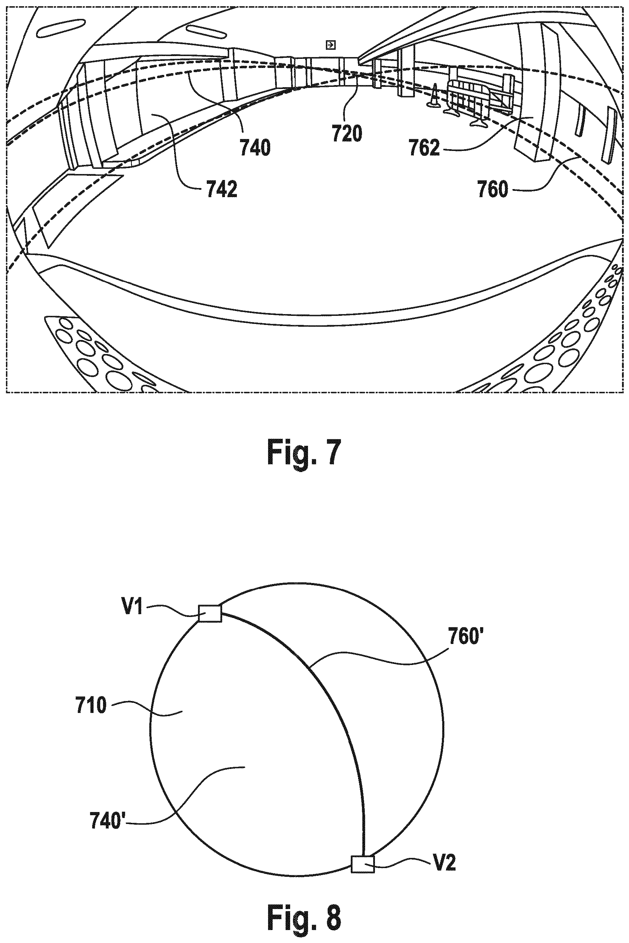

FIG. 7 shows another exemplary image calibration scene where the preliminary reference point X is located at the vanishing point 720 of two parallel straight line feature edges (740, 760). The parallel straight line feature edges may be extracted from images captured by a first and second image sensor using the methods described in association with blocks 410 and 420 of FIG. 4. The first feature edge 740 corresponds to the surface of a wall 742 while the second feature edge 760 corresponds to a side of a pillar 762 which is parallel to the wall 742. The vanishing point 720 may be obtained by extrapolating the first and second feature edges (740, 760) and finding their intersection point. In another implementation, the vanishing point may also be determined by back-projecting the image points associated with each of the feature edges appearing in first and second image sensors captured images onto a unitary sphere and finding the intersection points of the respective circles corresponding to each feature edge. The intersection point selected as a preliminary reference point for extrinsic parameter calibration is the one which appears in images captured by both the first and second image sensors. By way of example, FIG. 8 is a simplified schematic illustration of a first 740' and second circle 760' obtained by back-projecting first and second straight line feature edges which are parallel to each other such as the ones shown in FIG. 7 (740, 760) onto a unitary sphere 710. Vanishing points (V1, V2) associated with the two parallel straight line feature edges are located where the two circles (740', 760') intersect. The vanishing point which corresponds to an image point appearing in the first and second image frames is selected as the preliminary reference point. As discussed earlier, the method 400 for selecting a reference point in FIG. 4 can be similarly applied to selecting a preliminary reference point that is located at the vanishing point of two parallel straight line feature edges. That is, similar to the implementations where a preliminary reference point located at the intersection of two straight line feature edges is selected, selection methods based on epipolar geometry as exemplified by blocks 440-470 of FIG. 4 may be used to confirm if a preliminary reference point may be used as an extrinsic parameter calibration reference point.

According to another aspect of this disclosure, a reference point for extrinsic parameter calibration may be also be selected by determining if the location of one or more vanishing points for a pair of parallel feature edges derived from image frames taken by a first and second image sensor coincide. In one implementation the images of a pair of parallel feature edges captured by the first and second image sensors may be back-projected onto a unitary sphere like in FIG. 8. If the vanishing points obtained based on a back-projection of the parallel edge features appearing in a first image frame from a first image sensor coincides with that obtained from the back-projection of the same feature edges appearing in a second image captured by a second image sensor, then the vanishing point which is within the field of view of the first and second image sensors (that is, it is visible in images captured by the sensors) may be used as reference points for extrinsic parameter calibration.

In an optional implementation, the selection of reference points for extrinsic calibration may also involve the steps of using Random Sample Consensus (RANSAC) algorithm to filter out the number of erroneous reference points. RANSAC is a known algorithm. In some implementations, RANSAC may be applied by selecting a subset of the reference points which are under consideration, estimating one or more extrinsic parameters of an image sensor based on this subset and classifying reference points in the subset as inlier or outlier reference points. This process is repeated iteratively on different subsets of reference points so as to prune out outlier reference points and obtain one or more extrinsic parameters which are as far as possible based on inlier reference points. The reference points under consideration may be selected using the epipolar geometry or vanishing point correlation selection methods described above. It will be appreciated by a person skilled in the art that multiple calibration reference points may be selected some using epipolar geometry and some using the foregoing selection method of matching vanishing points. For instance, the machine vision module 340 in the exemplary system 300 illustrated in FIG. 3 may be additionally or alternatively configured to perform an automated selection method based on matching vanishing points.

While various aspects and implementations have been disclosed herein, other aspects and implementations will be apparent to those skilled in the art. The various aspects and implementations disclosed herein are for purposes of illustration and are not intended to be limiting, with the true scope being indicated by the following claims. It is also to be understood that the terminology used herein is for the purpose of describing particular implementations only, and is not intended to be limiting.

## Claims

1.  A method for selecting a reference point for extrinsic parameter calibration of at least a first or second image sensor of a vehicle comprising:

    selecting, by a processor, a preliminary reference point which is located at the intersection point or vanishing point of two straight line feature edges appearing in a first and second image frame captured by the first and second image sensor respectively;
    determining, by the processor, a first epipolar line (l') corresponding to a first reference image point of the preliminary reference point in the first image, the first epipolar line (l') being located on an image plane of the second image sensor; and
    determining, by the processor, if the first epipolar line (l') intersects a second reference image point of the preliminary reference point in the second image frame.

2.  The method of claim 1 further comprising selecting the preliminary reference point as a reference point for extrinsic parameter calibration in response to the first epipolar line (l') intersecting the second reference image point.

3.  The method of claim 1 further comprising:

    determining a second epipolar line (1) corresponding to the second reference image point, the second epipolar line (1) being located on an image plane of the first image sensor; and
    determining if the second epipolar line (l) intersects with the first reference image point.

4.  The method of claim 3 further comprising selecting the preliminary reference point as a reference point for extrinsic parameter calibration in response to both the first epipolar line (l') intersecting the second reference image point and the second epipolar line (1) intersecting the first reference image point.

5.  The method according to any of the preceding claims further comprising detecting for the presence of straight line feature edges in at least a portion of the first and second image frames before selecting the preliminary reference point.

6.  The method according to claim 5 wherein detecting for the presence of straight line feature edges comprises detecting for the presence of edges in at least a portion of the first and second image frames and then determining which of the detected edges are straight lines.

7.  The method according to any of the preceding claims further comprising selecting a second reference point for extrinsic parameter calibration of at least a first or second image sensor comprising:

selecting, by the processor, two parallel straight line feature edges appearing in both a third and fourth image frame captured by the first and second image sensor;

determining, by the processor, at least a first vanishing point for the two parallel straight line feature edges based on the third image frame;

determining, by the processor, at least a second vanishing point for the two parallel straight line feature edges based on the fourth image frame; and

in response to the first and second vanishing point substantially coinciding, selecting the first or second vanishing point as the second reference point.

8. The method of claim 7, wherein determining at least the first vanishing point comprises:

back-projecting image points for the two parallel straight line feature edges in the third image frame onto a unitary sphere and calculating the first vanishing point from the image points back-projected from the third image frame; and

determining at least the second vanishing point comprises back-projecting image points for the two parallel straight line feature edges in the fourth image frame onto the unitary sphere and calculating the second vanishing point from the image points back-projected from the fourth image frame.

9. The method according to any of the preceding claims further comprising applying Random Sample Consensus (RANSAC) algorithm to determine if the preliminary reference point may be used as a reference point for extrinsic parameter calibration.

10. A device for selecting a reference point for extrinsic parameter calibration of at least a first or second image sensor of a vehicle comprising:

a processor (342);

at least one memory (344) coupled to the processor (342) and storing instructions executable by the processor (342) causing the processor (342) to:

select a preliminary reference point which is located at the intersection point or vanishing point of two straight line feature edges appearing in a first and second image frame captured by the first and second image sensor respectively;

determine a first epipolar line (l') corresponding to a first reference image point of the preliminary reference point in the first image, the first epipolar line (l') being located on an image plane of the second image sensor; and

determine if the first epipolar line (l') intersects a second reference image point of the preliminary reference point in the second image frame.

11. The device of claim 10, wherein the at least one memory further causes the processor to:

determine a second epipolar line (1) corresponding to the second reference image point, the second epipolar line (1) being located on an image plane of the first image sensor; and

determine if the second epipolar line (1) intersects with the first reference image point.

12. The device of claim 11, wherein the at least one memory further causes the processor (342) to select the preliminary reference point as a reference point for extrinsic parameter calibration in response to both the first epipolar line (l') intersecting the second reference image point and the second epipolar line (1) intersecting the first reference image point.

13. The device according to any of claims 10-12, wherein the at least one memory (344) further causes the processor (342) to select a second reference point for extrinsic parameter calibration of at least a first or second image sensor, the steps for selecting the second reference point comprising:

selecting two parallel straight line feature edges appearing in both a third and fourth image frame captured by the first and second image sensor;

determining at least a first vanishing point for the two parallel straight line feature edges based on the third image frame;

determining at least a second vanishing point for the two parallel straight line feature edges based on the fourth image frame; and

in response to the first and second vanishing point substantially coinciding, selecting the first or second vanishing point as the second reference point.

14. A non-transitory computer-readable storage medium comprising computer-readable instructions for carrying out the methods according to any of claims 1-9.

15. A vehicle comprising a device for selecting a reference point for extrinsic parameter calibration of at least a first or second image sensor according to any of claims 10-13.

**Patentansprüche**

1. Verfahren zum Auswählen eines Referenzpunkts für die Kalibrierung von extrinsischen Parametern mindestens eines ersten oder zweiten Bildsensors eines Fahrzeugs, umfassend:

Auswählen eines vorläufigen Referenzpunkts, der sich an dem Schnittpunkt oder Fluchtpunkt von zwei geradlinigen Merkmalskanten befindet, die in einem ersten und zweiten Bild-Frame erscheinen, die durch den ersten beziehungsweise den zweiten Bildsensor aufgenommenen werden, durch einen Prozessor;

Bestimmen einer ersten epipolaren Linie (l'), die einem ersten Referenzbildpunkt des vorläufigen Referenzpunkts in dem ersten Bild entspricht, durch den Prozessor, wobei sich die erste epipolare Linie (l') auf einer Bildebene des zweiten Bildsensors befindet; und

Bestimmen, ob die erste epipolare Linie (l') einen zweiten Referenzbildpunkt des vorläufigen Referenzpunkts in dem zweiten Bild-Frame schneidet, durch den Prozessor.

2. Verfahren nach Anspruch 1, ferner umfassend Auswählen des vorläufigen Referenzpunkts als einen Referenzpunkt für die Kalibrierung von extrinsischen Parametern als Reaktion darauf, dass die erste epipolare Linie (l') den zweiten Referenzbildpunkt schneidet.

3. Verfahren nach Anspruch 1, ferner umfassend:

Bestimmen einer zweiten epipolaren Linie (I), die dem zweiten Referenzbildpunkt entspricht, wobei sich die zweite epipolare Linie (I) auf einer Bildebene des ersten Bildsensors befindet; und

Bestimmen, ob die zweite epipolare Linie (I) den ersten Referenzbildpunkt schneidet.

4. Verfahren nach Anspruch 3, ferner umfassend Auswählen des vorläufigen Referenzpunkts als einen Referenzpunkt für die Kalibrierung von extrinsischen Parametern als Reaktion darauf, dass sowohl die erste epipolare Linie (l') den zweiten Referenzbildpunkt schneidet als auch die zweite epipolare Linie (I) den ersten Referenzbildpunkt schneidet.

5. Verfahren nach einem der vorhergehenden Ansprüche, ferner umfassend Detektieren des Vorhandenseins von geradlinigen Merkmalskanten in mindestens einem Abschnitt des ersten und des zweiten Bild-Frames vor dem Auswählen des vorläufigen Referenzpunkts.

6. Verfahren nach Anspruch 5, wobei das Detektieren des Vorhandenseins von geradlinigen Merkmalskanten Detektieren des Vorhandenseins von Kanten in mindestens einem Abschnitt des ersten und des zweiten Bild-Frames und dann Bestimmen, welche der detektierten Kanten gerade Linien sind, umfasst.

7. Verfahren nach einem der vorhergehenden Ansprüche, ferner umfassend Auswählen eines zweiten Referenzpunkts für die Kalibrierung von extrinsischen Parametern mindestens eines ersten oder zweiten Bildsensors, umfassend:

Auswählen von zwei parallelen geradlinigen Merkmalskanten, die sowohl in einem dritten als auch einem vierten Bild erscheinen, die durch den ersten und den zweiten Bildsensor aufgenommenen werden, durch den Prozessor;

Bestimmen mindestens eines ersten Fluchtpunkts für die zwei parallelen geradlinigen Merkmalskanten basierend auf dem dritten Bild-Frame durch den Prozessor;

Bestimmen mindestens eines zweiten Fluchtpunkts für die zwei parallelen geradlinigen Merkmalskanten basierend auf dem vierten Bild-Frame durch den Prozessor; und

Auswählen des ersten oder des zweiten Fluchtpunkts als den zweiten Referenzpunkt als Reaktion darauf, dass der erste und der zweite Fluchtpunkt im Wesentlichen übereinstimmen.

8. Verfahren nach Anspruch 7, wobei das Bestimmen mindestens des ersten Fluchtpunkts Folgendes umfasst:

Rückprojizieren von Bildpunkten für die zwei parallelen geradlinigen Merkmalskanten in dem dritten Bild-Frame auf eine einheitliche Kugelfläche und Berechnen des ersten Fluchtpunkts aus den Bildpunkten, die von dem dritten Bild-Frame rückprojiziert werden; und
das Bestimmen mindestens des zweiten Fluchtpunkts Rückprojizieren von Bildpunkten für die zwei parallelen geradlinigen Merkmalskanten in dem vierten Bild-Frame auf die einheitliche Kugelfläche und Berechnen des zweiten Fluchtpunkts aus rückprojizierten Bildpunkten, die von dem vierten Bild-Frame rückprojiziert werden, umfasst.

9. Verfahren nach einem der vorhergehenden Ansprüche, ferner umfassend Anwenden eines Random Sample Consensus(RANSAC)-Algorithmus, um zu bestimmen, ob der vorläufige Referenzpunkt als ein Referenzpunkt für die Kalibrierung von extrinsischen Parametern verwendet werden kann.

10. Vorrichtung zum Auswählen eines Referenzpunkts für die Kalibrierung von extrinsischen Parametern mindestens eines ersten oder zweiten Bildsensors eines Fahrzeugs, umfassend:

einen Prozessor (342);
mindestens einen Speicher (344), der an den Prozessor (342) gekoppelt ist und durch den Prozessor (342) ausführbare Anweisungen speichert, die den Prozessor (342) zu Folgendem veranlassen:

Auswählen eines vorläufigen Referenzpunkts, der sich an dem Schnittpunkt oder Fluchtpunkt von zwei geradlinigen Merkmalskanten befindet, die in einem ersten und zweiten Bild-Frame erscheinen, die durch den ersten beziehungsweise den zweiten Bildsensor aufgenommenen werden;
Bestimmen einer ersten epipolaren Linie (l'), die einem ersten Referenzbildpunkt des vorläufigen Referenzpunkts in dem ersten Bild entspricht, wobei sich die erste epipolare Linie (l') auf einer Bildebene des zweiten Bildsensors befindet; und
Bestimmen, ob die erste epipolare Linie (l') einen zweiten Referenzbildpunkt des vorläufigen Referenzpunkts in dem zweiten Bild-Frame schneidet.

11. Vorrichtung nach Anspruch 10, wobei der mindestens eine Speicher den Prozessor ferner zu Folgendem veranlasst:

Bestimmen einer zweiten epipolaren Linie (l), die dem zweiten Referenzbildpunkt entspricht, wobei sich die zweite epipolare Linie (l) auf einer Bildebene des ersten Bildsensors befindet; und
Bestimmen, ob die zweite epipolare Linie (l) den ersten Referenzbildpunkt schneidet.

12. Vorrichtung nach Anspruch 11, wobei der mindestens eine Speicher den Prozessor (342) ferner dazu veranlasst, den vorläufigen Referenzpunkt als einen Referenzpunkt für die Kalibrierung von extrinsischen Parametern als Reaktion darauf, dass sowohl die erste epipolare Linie (l') den zweiten Referenzbildpunkt schneidet als auch die zweite epipolare Linie (l) den ersten Referenzbildpunkt schneidet, auszuwählen.

13. Vorrichtung nach einem der Ansprüche 10 bis 12, wobei der mindestens eine Speicher (344) den Prozessor (342) ferner dazu veranlasst, einen zweiten Referenzpunkt für die Kalibrierung von extrinsischen Parametern mindestens eines ersten oder zweiten Bildsensors auszuwählen, wobei die Schritte zum Auswählen des zweiten Referenzpunkts Folgendes umfassen:

Auswählen von zwei parallelen geradlinigen Merkmalskanten, die sowohl in einem dritten als auch einem vierten Bild erscheinen, die durch den ersten und den zweiten Bildsensor aufgenommenen werden;
Bestimmen mindestens eines ersten Fluchtpunkts für die zwei parallelen geradlinigen Merkmalskanten basierend auf dem dritten Bild-Frame;
Bestimmen mindestens eines zweiten Fluchtpunkts für die zwei parallelen geradlinigen Merkmalskanten basierend auf dem vierten Bild-Frame; und
Auswählen des ersten oder des zweiten Fluchtpunkts als den zweiten Referenzpunkt als Reaktion darauf, dass der erste und der zweite Fluchtpunkt im Wesentlichen übereinstimmen.

14. Nichttransitorisches computerlesbares Speichermedium, umfassend computerlesbare Anweisungen zum Ausführen der Verfahren nach einem der Ansprüche 1 bis 9.

15. Fahrzeug, umfassend eine Vorrichtung zum Auswählen eines Referenzpunkts für die Kalibrierung von extrinsischen Parametern mindestens eines ersten oder zweiten Bildsensors nach einem der Ansprüche 10 bis 13.

**Revendications**

1. Procédé de sélection d'un point de référence d'étalonnage de paramètre extrinsèque d'au moins un premier ou un second capteur d'image d'un véhicule comprenant :

   la sélection, par un processeur, d'un point de référence préliminaire qui est situé au niveau du point d'intersection ou du point de fuite de deux bords de traits de droite apparaissant dans une première et une deuxième trame d'image capturées respectivement par le premier et le second capteur d'image ;
   la détermination, par le processeur, d'une première ligne épipolaire (l') correspondant à un premier point d'image de référence du point de référence préliminaire dans la première image, la première ligne épipolaire (l') étant située sur un plan d'image du second capteur d'image ; et
   le fait de déterminer, par le processeur, si la première ligne épipolaire (l') coupe un second point d'image de référence du point de référence préliminaire dans la deuxième trame d'image.

2. Procédé selon la revendication 1, comprenant également la sélection du point de référence préliminaire en tant que point de référence d'étalonnage de paramètre extrinsèque en réponse à la première ligne épipolaire (l') coupant le second point d'image de référence.

3. Procédé selon la revendication 1, comprenant également :

   la détermination d'une seconde ligne épipolaire (l) correspondant au second point d'image de référence, la seconde ligne épipolaire (l) étant située sur un plan d'image du premier capteur d'image ; et
   le fait de déterminer si la seconde ligne épipolaire (l) coupe le premier point d'image de référence.

4. Procédé selon la revendication 3 comprenant également la sélection du point de référence préliminaire en tant que point de référence d'étalonnage de paramètre extrinsèque en réponse à la fois à la première ligne épipolaire (l') coupant le second point d'image de référence et à la seconde ligne épipolaire (l) coupant le premier point d'image de référence.

5. Procédé selon l'une quelconque des revendications précédentes comprenant également la détection de la présence de bords de traits de droite dans au moins une partie des première et seconde trames d'image avant la sélection du point de référence préliminaire.

6. Procédé selon la revendication 5, dans lequel la détection de la présence de bords de traits de droite comprend la détection de la présence de bords dans au moins une partie des première et seconde trames d'image, puis la détermination de ceux des bords détectés qui sont des droites.

7. Procédé selon l'une quelconque des revendications précédentes comprenant également la sélection d'un second point de référence d'étalonnage de paramètre extrinsèque d'au moins un premier ou second capteur d'image comprenant :

   la sélection, par le processeur, de deux bords de traits de droite parallèles apparaissant à la fois dans une troisième et une quatrième trame d'image capturées par le premier et le second capteur d'image ;
   la détermination, par le processeur, d'au moins un premier point de fuite pour les deux bords de traits de droite parallèles sur la base de la troisième trame d'image ;
   la détermination, par le processeur, d'au moins un second point de fuite pour les deux bords de traits de droite parallèles sur la base de la quatrième trame d'image ;
   et
   en réponse à la coïncidence substantielle du premier et du second point de fuite, la sélection du premier ou du second point de fuite en tant que second point de référence.

8. Procédé selon la revendication 7, dans lequel la détermination au moins du premier point de fuite comprend :

la rétroprojection de points d'image pour les deux bords de traits de droite parallèles dans la troisième trame d'image sur une sphère unitaire et le calcul du premier point de fuite à partir des points d'image rétroprojetés à partir de la troisième trame d'image ; et
la détermination au moins du second point de fuite comprend la rétroprojection de points d'image pour les deux bords de traits de droite parallèles dans la quatrième trame d'image sur la sphère unitaire et le calcul du second point de fuite à partir des points d'image rétroprojetés à partir de la quatrième trame d'image.

9. Procédé selon l'une quelconque des revendications précédentes comprenant également l'application de l'algorithme Random Sample Consensus (RANSAC) pour déterminer si le point de référence préliminaire peut être utilisé en tant que point de référence d'étalonnage de paramètre extrinsèque.

10. Dispositif de sélection d'un point de référence d'étalonnage de paramètre extrinsèque d'au moins un premier ou un second capteur d'image d'un véhicule comprenant :

un processeur (342) ;
au moins une mémoire (344) couplée au processeur (342) et stockant des instructions exécutables par le processeur (342) amenant le processeur (342) à :

sélectionner un point de référence préliminaire qui est situé au niveau du point d'intersection ou du point de fuite de deux bords de traits de droite apparaissant dans une première et une deuxième trame d'image capturées respectivement par le premier et le second capteur d'image ;
déterminer une première ligne épipolaire (l') correspondant à un premier point d'image de référence du point de référence préliminaire dans la première image, la première ligne épipolaire (l') étant située sur un plan d'image du second capteur d'image ; et
déterminer si la première ligne épipolaire (l') coupe un second point d'image de référence du point de référence préliminaire dans la deuxième trame d'image.

11. Dispositif selon la revendication 10, dans lequel l'au moins une mémoire amène également le processeur à :

déterminer une seconde ligne épipolaire (l) correspondant au second point d'image de référence, la seconde ligne épipolaire (l) étant située sur un plan d'image du premier capteur d'image ; et
déterminer si la seconde ligne épipolaire (l) coupe le premier point d'image de référence.

12. Dispositif selon la revendication 11, dans lequel l'au moins une mémoire amène également le processeur (342) à sélectionner le point de référence préliminaire en tant que point de référence d'étalonnage de paramètre extrinsèque en réponse à la fois à la première ligne épipolaire (l') coupant le second point d'image de référence et à la seconde ligne épipolaire (l) coupant le premier point d'image de référence.

13. Dispositif selon l'une quelconque des revendications 10 à 12, dans lequel l'au moins une mémoire (344) amène également le processeur (342) à sélectionner un second point de référence d'étalonnage de paramètre extrinsèque d'au moins un premier ou un second capteur d'image, les étapes de sélection du second point de référence comprenant :

la sélection de deux bords de traits de droite parallèles apparaissant à la fois dans une troisième et une quatrième trame d'image capturées par le premier et le second capteur d'image ;
la détermination d'au moins un premier point de fuite pour les deux bords de traits de droite parallèles sur la base de la troisième trame d'image ;
la détermination d'au moins un second point de fuite pour les deux bords de traits de droite parallèles sur la base de la quatrième trame d'image ; et
en réponse à la coïncidence substantielle du premier et du second point de fuite, la sélection du premier ou du second point de fuite en tant que second point de référence.

14. Support de stockage non transitoire lisible par ordinateur comprenant des instructions lisibles par ordinateur pour la mise en œuvre des procédés selon l'une quelconque des revendications 1 à 9.

15. Véhicule comprenant un dispositif de sélection d'un point de référence d'étalonnage de paramètre extrinsèque d'au moins un premier ou un second capteur d'image selon l'une quelconque des revendications 10 à 13.

160

160

120

140

## Fig. 1A

## Fig. 1B

**Fig. 2**

**Fig. 3**

Fig. 4

Fig. 5A

Fig. 5B

**Fig. 6A**

**Fig. 6B**

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170347030 A1

- EP 3086284 A1